(19) Europäisches Patentamt
European Patent Office
Office européen des brevets

(11) Veröffentlichungsnummer: **0 437 744 B1**

(12) **EUROPÄISCHE PATENTSCHRIFT**

(45) Veröffentlichungstag der Patentschrift: **18.01.95**

(51) Int. Cl.[6]: **A01N 47/44**, //(A01N47/44, 43:653)

(21) Anmeldenummer: **90124097.8**

(22) Anmeldetag: **13.12.90**

Die Akte enthält technische Angaben, die nach dem Eingang der Anmeldung eingereicht wurden und die nicht in dieser Patentschrift enthalten sind.

# (54) Fungizide Wirkstoffkombinationen.

(30) Priorität: **17.01.90 DE 4001117**

(43) Veröffentlichungstag der Anmeldung:
**24.07.91 Patentblatt 91/30**

(45) Bekanntmachung des Hinweises auf die Patenterteilung:
**18.01.95 Patentblatt 95/03**

(84) Benannte Vertragsstaaten:
**BE CH DE DK ES FR GB IT LI LU NL SE**

(56) Entgegenhaltungen:
**EP-A- 0 266 048**
**DE-A- 3 234 624**
**FR-A- 2 328 399**

**CHEMICAL ABSTRACTS, Band 111, Nr. 1, 3. Juli 1989, Seite 255, ZusammenfassungNr. 2583b, Columbus, Ohio, US; C.A. FORCELINI et al.: "Control ofhelminthosporium sativum, Septoria nodorum, Fusarium graminearum and Erysiphe graminis f. sp. tritici in wheat by seed treatment with fungicides"**

(73) Patentinhaber: **BAYER AG**

**D-51368 Leverkusen (DE)**

(72) Erfinder: **Dutzmann, Stefan, Dr.**
**Kosenberg 10**
**W-4010 Hilden 1 (DE)**
Erfinder: **Scheinpflug, Hans, Prof. Dr.**
**Am Thelenhof 15**
**W-5090 Leverkusen 1 (DE)**
Erfinder: **Berg, Dieter, Dr.**
**Gellertweg 27**
**W-5600 Wuppertal 1 (DE)**
Erfinder: **Krämer, Wolfgang, Dr.**
**Rosenkranz 25**
**W-5093 Burscheid 2 (DE)**

EP 0 437 744 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Anmeldung betrifft neue Wirkstoffkombinationen, die aus den bekannten Wirkstoffen 1-(4-Chlorphenoxy)-3,3-dimethyl-1-(1,2,4-triazol-1-yl)-butan-2-ol bzw. 1-(4-Phenyl-phenoxy)-3,3-dimethyl-1-(1,2,4-triazol-1-yl)-butan-2-ol einerseits und aus ebenfalls bekannten guanidierten aliphatischen Polyaminen andererseits bestehen und sehr gut zur Bekämpfung von Pilzen geeignet sind.

Es ist bereits bekannt, daß 1-(4-Chlorphenoxy)-3,3-dimethyl-1-(1,2,4-triazol-1-yl)-butan-2-ol (= Triadimenol) und 1-(4-Phenyl-phenoxy)-3,3-dimethyl-1-(1,2,4-triazol-l-yl)-butan-2-ol (= Bitertanol) fungizide Potenz besitzen (vgl. DE-C 2 324 010). Die Wirksamkeit dieser Stoffe ist gut; sie läßt jedoch bei niedrigen Aufwandmengen in manchen Fällen zu wünschen übrig.

Ferner ist schon bekannt, daß guanidierte aliphatische Polyamine fungizide Eigenschaften aufweisen. So kann z.B. das Produkt mit dem Common Name "Guazatine" zur Bekämpfung von Pilzen eingesetzt werden (vgl. K.H. Büchel "Pflanzenschutz und Schädlingsbekämpfung", Seite 149, Georg Thieme Verlag, Stuttgart, 1977). Die Wirkung dieses Stoffes ist aber bei niedrigen Aufwandmengen ebenfalls nicht immer befriedigend.

Aus dem in Chemical Abstracts 111, 2583 b (1989) referierten Artikel geht hervor, daß sich Mischungen aus Triadimenol und Iminoctadine zur Bekämpfung von Pilzen verwenden lassen. Angaben über andere Mischungen sind aber nicht vorhanden. Außerdem finden sich keine Hinweise darauf, daß eine synergistische Wirksamkeit auftritt.

Weiterhin ist der DE-A 3 234 624 zu entnehmen, daß Kombinationen aus Triadimenol bzw. Bitertanol und Guanidin-Derivaten eine überadditive fungizide Wirkung zeigen. Entsprechende Mischungen, die Guazatine enthalten, werden aber nicht erwähnt.

Schließlich sind aus der EP-A 0 266 048 synergistisch wirksame Kombinationen aus (E)-1(2,4-Dichlorphenyl)-4,4-dimethyl-2-(1,2,4-triazol-1-yl)-1-penten-3-ol (= Diniconazole) und Guazatine bekannt. Die Azolkomponente unterscheidet sich konstitutionell aber ganz erheblich vom Triadimenol bzw. Bitertanol.

Es wurde nun gefunden, daß die neuen Wirkstoffkombinationen aus

A) 1-(4-Chlorphenoxy)-3,3-dimethyl-1-(1,2,4-triazol-1-yl)-butan-2-ol der Formel

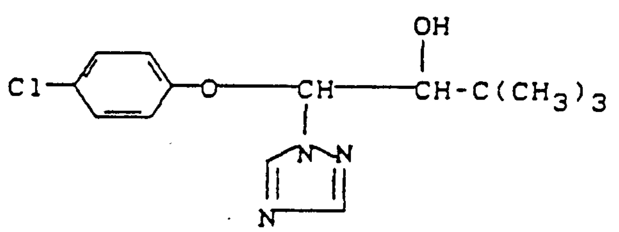

(I)

und/oder

1-(4-Phenyl-phenoxy)-3,3-dimethyl-1-(1,2,4-triazol-1-yl)butan-2-ol der Formel

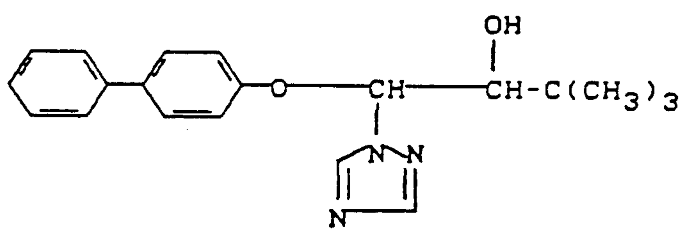

(II)

und

B) guanidiertem, aliphatischen Polyamin der Formel

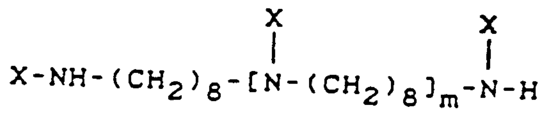

(III-1)

$\times (2 + m)\ CH_3COOH$

worin

m für ganze Zahlen von 0 bis 5 steht und

X für Wasserstoff (17 bis 23 %) oder den Rest der Formel

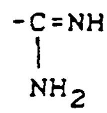

(77 bis 83 %)

steht,

wobei in den Wirkstoffkombinationen das Gewichtsverhältnis von Wirkstoff der Formel (I) oder (II) zu guanidiertem aliphatischen Polyamin der Formel (III-1) zwischen 1:0,2 und 1:20 liegt,

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer echter synergistischer Effekt vor und nicht nur eine Wirkungsergänzung.

Die in den erfindungsgemäßen Wirkstoffkombinationen enthaltenen Wirkstoffe der Formeln (I) und (II) sind bereits bekannt (vgl. DE-C 2 324 010).

Das in den erfindungsgemäßen Wirkstoffkombinationen weiterhin enthaltene guanidierte aliphatische Polyamine durch die Formel (III-1) definiert.

Es handelt sich hierbei um das Fungizid mit dem Common Name "Guazatine", das bei der Reaktion von Polyaminen, insbesondere von Octamethylendiamin, Iminodi(octamethylen)-diamin, mit Cyanamid entsteht und in Form von Acetat-Salzen vorliegt.

Angaben zur Zusammensetzung von Guazatine finden sich auch in Farm Chemicals Handbook 1989, C. 151.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) oder (II) 0,2 bis 20 Gew.-Teile, vorzugsweise 0,5 bis 10 Gew.-Teile an guanidiertem aliphatischen Polyamin der Formel (III - 1).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Botrytis-Arten im Weinbau, bei Beerenobst und im Gemüsebau sowie zur Bekämpfung von Getreidekrankheiten, wie Fusarium.

Die gute Pflanzenverträglichkeit der Wirkstoffkombinationen in den zur Bekämfpung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter weise hergestellt, z.B, durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/ oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispiellen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Beispiel 1

Fusarium nivale-Test (Roggen) / Saatgutbehandlung

Die Anwendung der Wirkstoffe erfolgt als Trockenbeizmittel. Sie werden zubereitet durch Abstrecken des jeweiligen Wirkstoffes bzw. der Wirkstoffkombination mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Roggen sät man mit 2 x 100 Korn 1 cm tief in eine Standarderde und kultiviert ihn im Gewächshaus bei einer Temperatur von ca. 10 °C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome des Schneeschimmels.

Wirkstoffe, Wirkstoffkonzentrationen und Versuchsergebnisse gehen aus der folgenden Tabellen hervor.

Tabelle 1 -A

Fusarium nivale-Test (Roggen) / Saatgutbehandlung

| Wirkstoff | Wirkstoffaufwandmenge in mg/kg Saatgut | Wirkungsgrad in % der unbehandelten Kontrolle |
|---|---|---|
| - (Kontrolle) | - | =0 |
| Guazatine (III-1) | 80 | 84 |
| 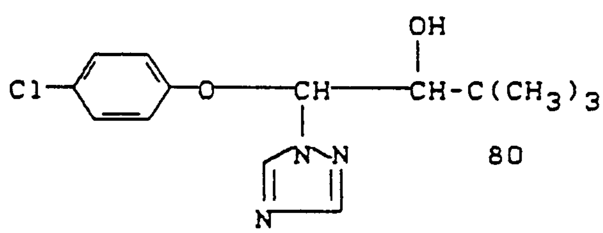 (I) | 80 | 78 |
| **Erfindungsgemäß:** | | |
| (I) + (III-1) (1:1) | 40 + 40 | 100 |

Tabelle 1 - B

Fusarium nivale-Test (Roggen) / Saatgutbehandlung

| Wirkstoff | Wirkstoffaufwandmenge in mg/kg Saatgut | Wirkungsgrad in % der unbehandelten Kontrolle |
|---|---|---|
| - (Kontrolle) | - | =0 |
| Guazatine (III-1) | 40 | 47 |
| 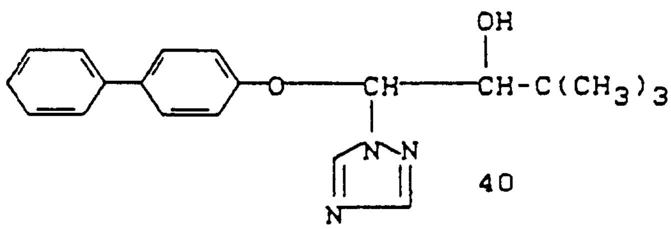 (II) | 40 | 65 |
| **Erfindungsgemäß:** | | |
| (II) + (III-1) (1:1) | 20 + 20 | 100 |

**Patentansprüche**

1. Fungizide Mittel, gekennzeichnet durch einen Gehalt an einer Wirkstoffkombination bestehend aus
A) 1-(4-Chlorphenoxy)-3,3-dimethyl-1-(1,2,4-triazol-1-yl)-butan-2-ol der Formel

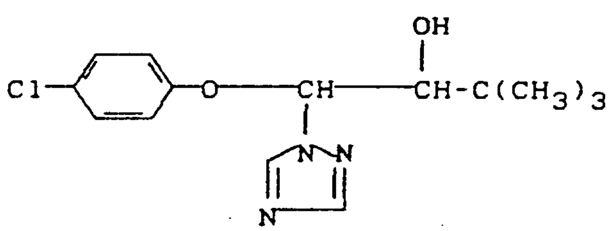 (I)

und/oder
1-(4-Phenyl-phenoxy)-3,3-dimethyl-1-(1,2,4-triazol-1-yl)butan-2-ol der Formel

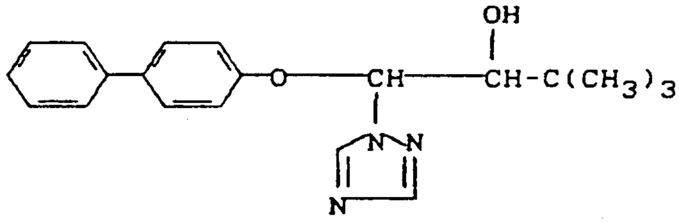

(II)

und

B) guanidiertem, aliphatischen Polyamin der Formel

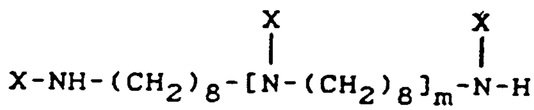

(III-1)

x (2 + m) $CH_3COOH$

worin

- m für ganze Zahlen von 0 bis 5 steht und
- X für Wasserstoff (17 bis 23 %) oder den Rest der Formel

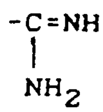

(77 bis 83 %)

steht,

wobei in den Wirkstoffkombinationen das Gewichtsverhältnis von Wirkstoff der Formel (I) oder (II) zu guanidiertem aliphatischen Polyamin der Formel (III-1) zwischen 1:0,2 und 1:20 liegt.

**2.** Mittel gemäß Anspruch 1, dadurch gekennzeichnet, daß in den Wirkstoffkombinationen das Gewichtsverhältnis von Wirkstoff der Formel (I) oder (II) zu guanidiertem aliphatischen Polyamin zwischen 1:0,5 und 1:10 liegt.

**3.** Verfahren zur Bekämpfung von Pilzen, dadurch gekennzeichnet, daß man Wirkstoffkombinationen gemäß Anspruch 1 auf die Pilze und/oder deren Lebensraum einwirken läßt.

**4.** Verwendung von Wirkstoffkombinationen gemäß Anspruch 1 zur Bekämpfung von Pilzen.

**5.** Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

## Claims

**1.** Fungicidal agents, characterized in that they contain an active compound combination consisting of

A) 1-(4-chlorophenoxy)-3,3-dimethyl-1-(1,2,4-triazol-1-yl)-butan-2-ol, of the formula

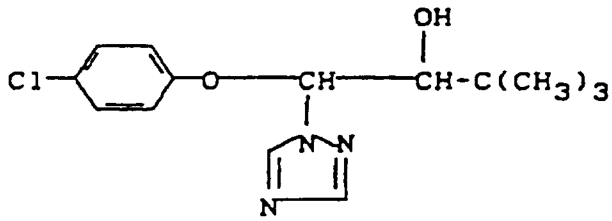

(I)

and/or

1-(4-phenyl-phenoxy)-3,3-dimethyl-1-(1,2,4-triazol-1-yl)butan-2-ol, of the formula

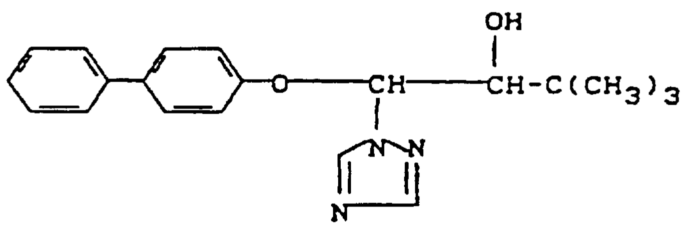

(II)

and

B) guanidated, aliphatic polyamine of the formula

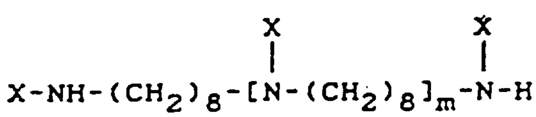

(III-1)

$x\ (2 + m)\ CH_3COOH$

where

- m represents integers from 0 to 5 and
- X represents hydrogen (17 to 23%) or the radical of the formula

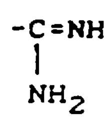

(77 to 83%),

in the active compound combinations, the ratio by weight of active compound of the formula (I) or (II) to guanidated aliphatic polyamine of the formula (III-1) being between 1:0.2 and 1:20.

**2.** Agents according to Claim 1, characterized in that, in the active compound combinations, the ratio by weight of active compound of the formula (I) or (II) to guanidated aliphatic polyamine is between 1:0.5 and 1:10.

**3.** Method of combating fungi, characterized in that active compound combinations according to Claim 1 are allowed to act on the fungi and/or their habitat.

**4.** Use of active compound combinations according to Claim 1 for combating fungi.

5. Process for the preparation of fungicidal agents, characterized in that active compound combinations according to Claim 1 are mixed with extenders and/or surface-active substances.

**Revendications**

1. Compositions fongicides, caractérisées par une teneur en une combinaison de substances actives constituée

   A) de 1-(4-chlorophénoxy)-3,3-diméthyl-1-(1,2,4-triazole-1-yl)-butane-2-ol de formule

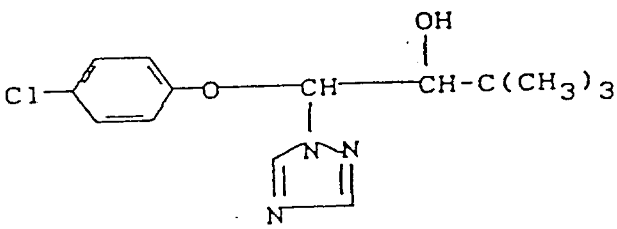

(I)

   et/ou

   de 1-(4-phényl-phénoxy)-3,3-diméthyl-1-(1,2,4-triazole-1-yl)-butane-2-ol de formule

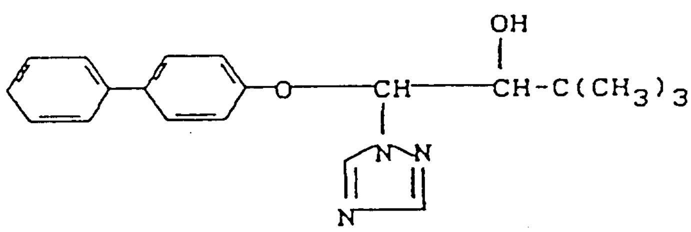

(II)

   et

   B) d'une polyamine aliphatique à structure de guanidine de formule

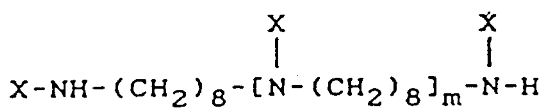

(III-1)

$$x\ (2 + m)\ CH_3COOH$$

   dans laquelle

   m représente des nombres entiers de 0 à 5 et

   X est de l'hydrogène (17 à 23 %) ou le reste de formule

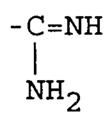

(77 à 83 %)

   le rapport en poids de la substance active de formule (I) ou (II) à la polyamine aliphatique à structure de guanidine de formule (III-1) dans les combinaisons de substances actives ayant une valeur comprise entre 1:0,2 et 1:20.

2. Composition suivant la revendication 1, caractérisée en ce que dans les combinaisons de substances actives, le rapport en poids de la substance active de formule (I) ou (II) à la polyamine aliphatique à structure de guanidine est compris entre 1:0,5 et 1:10.

**3.** Procédé pour combattre des champignons, caractérisé en ce qu'on fait agir des combinaisons de substances actives suivant la revendication 1 sur les champignons et/ou sur leur milieu.

**4.** Utilisation de combinaisons de substances actives suivant la revendication 1 pour combattre des champignons.

**5.** Procédé de préparation de compositions fongicides, caractérisé en ce qu'on mélange des combinaisons de substances actives suivant la revendication 1 avec des diluants et/ou des agents tensio-actifs.